# EUROPEAN PATENT SPECIFICATION

(11) **EP 2 397 670 B1**
(45) Date of publication and mention of the grant of the patent: **18.03.2015**
(21) Application number: 11170073.8
(22) Date of filing: 15.06.2011
(51) Int. Cl.: F02C 1/04, F02C 7/143, F02C 9/20

(54) **Method for controlling emissions in a heat engine, in particular a gas turbine, and a heat engine**
Verfahren zur Emissionsbegrenzung einer Wärmekraftmaschine, insbesondere eine Gasturbine, und eine Wärmekraftmaschine
Procédé de contrôle des émissions dans une machine thermique, en particulier une turbine à gaz, et une machine thermique

(30) Priority: 15.06.2010 IT MI20101075
(43) Date of publication of application: 21.12.2011
(73) Proprietor: Ansaldo Energia S.p.A., Genova (IT)
(72) Inventor: Piccardo, Fabio, 16149 Genova (IT); Rovere, Nicola, 16137 Genova (IT)
(74) Representative: Bergadano, Mirko

(56) References cited:
- US-A- 3 975 900
- US-A- 4 951 460
- US-A- 5 697 207
- US-A1- 2001 022 078
- US-A1- 2006 080 965
- US-A1- 2006 220 472
- US-A1- 2009 053 036
- US-A1- 2009 060 725
- US-B1- 6 513 318

## Description

The present invention relates to a method for controlling emissions in a heat engine, in particular a gas turbine, and to a heat engine.

As known, control of pollutant emissions is an objective of primary importance in the production of any type of heat engine and, in particular, of gas turbines used for generating electric power. The increased awareness of environmental risks causes a move towards regulations that impose ever more restrictive limits.

The containment of emissions is especially critical when the heat engines are operating in low-load conditions, since the machines themselves are optimized to deliver higher power. For example, gas turbines are operated under minimum technical environmental conditions when energy demand is very low (like at night), but regulations require maintaining the ability to respond to sudden network demands.

One of the problems to be addressed in order to effectively reduce polluting emissions is to maintain optimum working conditions that allow to balance conflicting demands, particularly relating to emissions of nitrogen oxides (NO_{X}) and carbon monoxide (CO). For example, the temperature inside the combustion chamber influences both emissions of nitrogen oxides, and carbon monoxide, but in an opposite way. High temperatures allow to completely oxidize the carbon in the fuel, thus reducing the formation of carbon monoxide. At the same time, however, oxidation of nitrogen is increased in the comburant air therefore increasing combustion emissions of nitrogen oxide. On the contrary, relatively low temperatures in the combustion chamber hinder the formation of nitrogen oxides, but prevent the complete oxidation of carbon, facilitating the formation of carbon monoxide.

To resolve this problem, solutions have been proposed based substantially on controlling the combustion temperature of the comburant air fed to the combustion chamber. Essentially, a heat exchanger is placed along the intake air path and is controlled in order to obtain a desired temperature in the combustion chamber, to which corresponds a balance considered optimal between emissions of nitrogen oxides and carbon monoxide.

One limitation of known solutions is the difficulty of measuring the temperature in the combustion chamber, which is extremely high. It is therefore necessary to use estimates, which however affect the control quality.

Alternatively, the heat exchanger is controlled so that the comburant air temperature entering the compressor is close to a reference value, to which theoretically corresponds an optimal temperature in the combustion chamber.

Such solutions are based on the knowledge of the real operating conditions of the plant and do not take into account the inevitable variations due to wear and aging of components. In other words, the preliminary analysis of the plant allows to identify theoretical operating conditions which correspond to minimum levels of emission. Even by overlooking the deviations and tolerances compared to the theoretical values, the evolution of the status of the plant cannot be predicted except with very wide approximation. The consequence is that the temperature of the comburant air to which actually corresponds the optimal balance of the emissions tends to deviate from the originally planned target temperature. If, therefore, at the installation of the plant satisfactory results can be obtained, the control over the actual levels of emissions will degrade with time beyond repair.

The published patent application US 2001/022078 A1 teaches how to control the degree of humidity of incoming air to a compressor of a gas turbine aiming to reduce emissions of nitrogen oxides. The control of the degree of humidity is achieved by injecting water mist.

Other methods for controlling emissions of a heat engine are described in US 2006/080965 A1, US 4951460 A, US 2009/053036 A1, US 2009/060725 A1 and US 2006/220472 A1.

The aim of the present invention is therefore to provide a method for controlling emissions in a heat engine and a heat engine that are free of the limitations described above.

According to the present invention, a method for controlling emissions of a heat engine and a heat engine are implemented as defined respectively in claims 1 and 10.

The present invention will now be described with reference to the annexed drawings, which illustrate a non limitative example of embodiment, in which:
- Figure 1 is a simplified block diagram of a heat engine according to an embodiment of the present invention;
- Figure 2 is a more detailed block diagram of a component of the heat engine of Figure 1;
- Figure 3 is a flowchart for the functioning of a component element of Figure 2;
- Figure 4 is a simplified block diagram of a heat engine according to a different embodiment of the present invention;
- Figure 5 is a simplified block diagram of the plant for the production of electrical energy incorporating a heat engine according to an embodiment of the present invention.

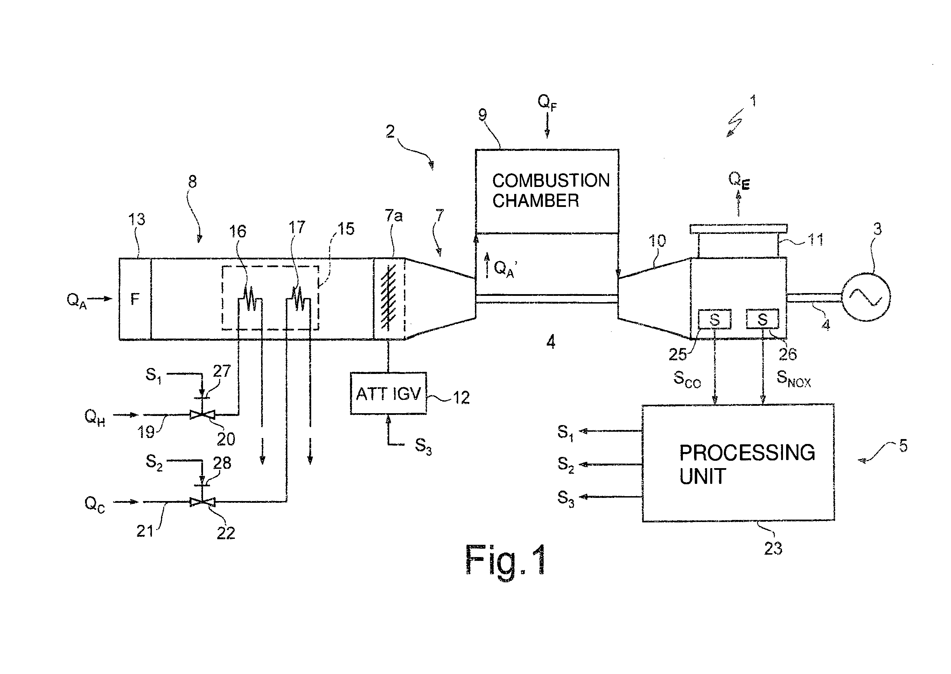

With reference to Figure 1, a plant for the production of electricity, indicated as a whole with number 1, comprises a gas turbine assembly 2, an alternator 3, coupled on the same shaft 4, and a device for controlling emissions 5, in particular nitrogen oxides NOₓ and carbon monoxide CO.

The gas turbine assembly 2 comprises a compressor 7, which sucks a flowrate of air Q_{A} from outside through an intake duct 8, a combustion chamber 9 and a turbine 10, coupled to the combustion chamber 9 for receiving and expanding a flowrate of exhaust gas Q_{E}. An exhaust assembly 11, downstream of the turbine 10, receives and evacuates the flowrate Q_{E} of exhaust gas produced by the gas turbine assembly 2. The compressor 7 and the intake duct 8 define a fluidic inlet path to the combustion chamber 9 for the air.

The compressor 7 is of the multi-stage axial type and is provided with an orientable inlet vane stage or IGV stage (Inlet Guide Vanes) 7a. The orienting of the vanes of the IGV stage is determined by way of a IGV actuator 12.

The flowrate of air Q_{A} sucked by the compressor 7 is conveyed through the intake duct 8, along which is arranged a filter 13 and a conditioning chamber 15, and treated by the compressor 7. After any spillage of fractions of the flowrate Q_{A}, for example to cool the turbine vanes 10, a residual flowrate Q_{A}' is fed into the combustion chamber 9. Here a flowrate of fuel Q_{F} is added to the flowrate of air Q_{A}', in a known way, and the mixture thus obtained is burned. For simplicity, in the following description any spillage and losses will be overlooked and the flowrate of air Q_{A}' actually fed into the combustion chamber will be considered equal to the flowrate Q_{A} sucked by the compressor 7, without therefore any loss of generality. It is noted however that the flowrate Q_{A}' is a fraction of the flowrate Q_{A} and that, by changing the flowrate Q_{A} also the flowrate Q_{A}' is changed in a substantially proportional way.

The filter 13 is arranged at the mouth of the intake duct 8 and removes from the sucked air flow solid particles and impurities.

The conditioning chamber 15 comprises a first heat exchanger 16 and a second heat exchanger 17. The first heat exchanger 16 receives a flowrate Q_{H} of a heating fluid through a supply line 19, along which is placed a first control valve 20. The second heat exchanger 17 receives a flowrate Q_{C} of a cooling fluid through a supply line 21, along which is placed a second control valve 22.

The device for controlling emissions 5 comprises a processing unit 23, a first detection cell 25 and a second detection cell 26, both placed in the exhaust assembly 11 of the turbine 10, so as to be invested by the exhaust gas flow.

In one embodiment, the processing unit 23 is a PLC (Programmable Logic Controller) and is coupled to the first detection cell 25 and the second detection cell 26 for receiving measurement signals as described below. In a different embodiment, the processing unit 23 is built into a controller of the plant 1, not shown here in its entirety for simplicity.

The first detection cell 25 can be an infrared optical cell for the detection of the concentration of carbon monoxide CO, while the second detection cell 26 may be a chemiluminescence type cell for the detection of the concentration of nitrogen oxides NO_{X}. The first detection cell 25 and the second detection cell 26 provide to the processing unit 23 respectively a first concentration signal S_{CO}, indicative of the concentration of carbon monoxide CO in the exhaust gas of the turbine 10, and a second concentration signal S_{NOX}, indicative of the concentration of nitrogen oxides NOₓ in the exhaust gas of the turbine 10.

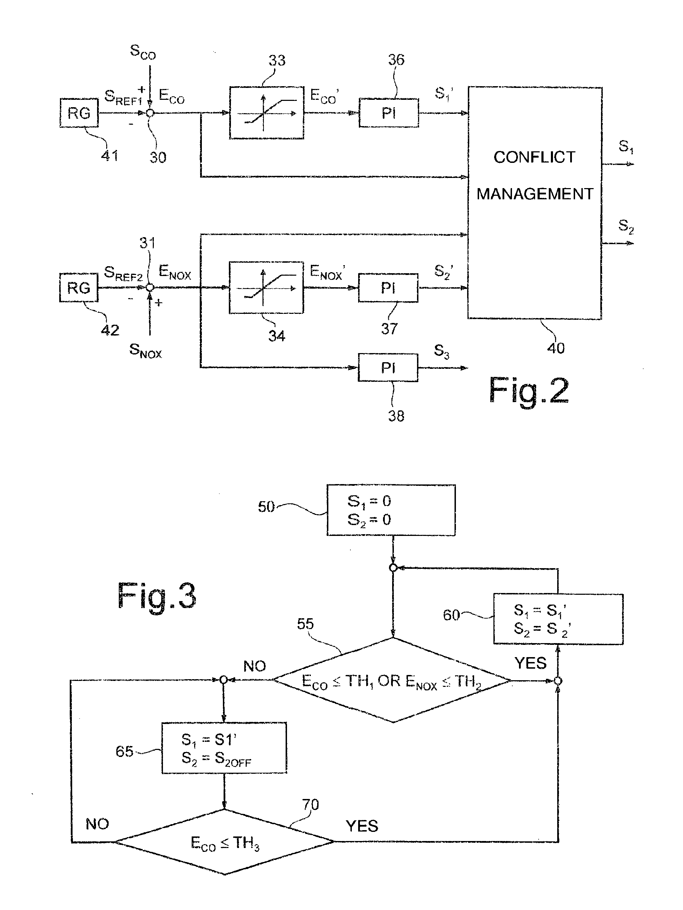

The processing unit 23 is configured to determine a first control signal S₁, a second control signal S₂ and a third control signal S₃ according to the first concentration signal S_{CO} and the second concentration signal S_{NOX}. The structure and the operation of the processing unit 23 will be described in more detail below, with reference to Figure 2.

The first control signal S₁ is supplied to an actuator 27 of the first control valve 20 and allows regulation of the flowrate of the heating fluid Q_{H} supplied to the first heat exchanger 16 of the conditioning chamber 15. The second control signal S₂ is supplied to an actuator 28 of the second control valve 22 and allows regulation of the flowrate of the cooling fluid Q_{C} supplied to the second heat exchanger 17 of the conditioning chamber 15. More precisely, the first control signal S₁ and the signal S₂ represent requests of change of the opening degree respectively of the first control valve 20 and of the second control valve 22 (rather than absolute values of opening). For example, a positive value indicates to the corresponding actuator a request to increase the opening degree of the respective valve, while a negative value indicates a request to reduce the opening degree. For null values, the opening degree of the valves is not changed.

The third control signal S₃ is supplied to the actuator 12 of the IGV stage 7a and allows to modify the orientation of the vanes of the IGV stage 7a.

The action of the first heat exchanger 16 and the second heat exchanger 17 allows the regulation of the temperature of the inlet air to the compressor 7, while the orientation of the vanes of the IGV stage 7a determines the flowrate Q_{A} of air sucked by the compressor 7 and fed into the combustion chamber 9.

Figure 2 shows the structure of the processing unit 23 according to an embodiment of the invention.

The processing unit 23 comprises a first subtractor node 30, a second subtractor node 31, a first saturation module 33, a second saturation module 34, a first controller 36, a second controller 37, a third controller 38 and a conflict management module 40.

The first subtractor node 30 receives the first concentration signal S_{CO} from the first detection cell 25 (not shown here) and a first reference signal S_{REF1} and calculates a first error signal E_{CO} on the basis of the difference between the first concentration signal S_{CO}, and the first reference signal S_{REF1}.

The second subtractor node 31 receives the second concentration signal S_{NOX} from the second detecting cell 26 (not shown here) and a second reference signal S_{REF2} and calculates a second error signal E_{NOX} on the basis of the difference between the second concentration signal S_{NOX} and the second reference signal S_{REF2}.

The reference signal S_{REF1} and the second reference signal S_{REF2} are indicative of the respective maximum allowable concentrations and are respectively provided by a first reference generator module 41 and a second reference generator module 42, that can be for example programmable memory elements.

The first saturation module 33 and the second saturation module 34 receive respectively the first error signal E_{CO} and the second error signal E_{NOX} and provide respectively a first saturated error signal E_{CO}' and a second error signal E_{NOX}'. In particular, the first saturated error signal E_{CO}' and the second saturated error signal E_{NOX}' respectively coincide with the first error signal E_{CO} and the second error signal E_{NOX}, between a negative saturation value and a positive saturation value; are equal to the negative saturation value, respectively, when the first error signal E_{CO} and the second error signal E_{NOX} are lesser than the negative saturation signal; and are equal to the positive saturation value, respectively, when the first error signal E_{CO} and the second error signal E_{NOX} are greater than the positive saturation value.

The first controller 36 and the second controller 37, which in the described embodiment are of proportional-integral type, respectively receive the first saturated error signal E_{CO}' and the second saturated error signal E_{NOX}' and use them to determine a first nominal control signal S₁' and a second nominal control signal S₂', which are supplied to the conflict management module 40.

The conflict management module 40 determines the first control signal S₁ and the second control signal S₂ on the basis of the first nominal control signal S₁', the second nominal control signal S₂', the first error signal E_{CO} and the second error signal E_{NOX}, in order to avoid the competition of opposing control actions through the first heat exchanger 16 and the second heat exchanger 17, which respectively tend to heat and cool the flowrate Q_{A} of air fed into the combustion chamber 9. More specifically, the conflict management module 40 prioritizes, in case of conflict, the reduction of the concentration of carbon monoxide CO, which is the most appropriate action to stabilize the combustion and therefore minimize polluting emissions. Under stable combustion conditions, the control on the concentration of nitrogen oxides NOₓ by way of the second heat exchanger 17 can be temporarily excluded. Practically, if excesses both of carbon monoxide CO and nitrogen oxides NOₓ occur, the conflict management module 40 calculates the first control signal S₁ and the second control signal S₂ so as to increase the temperature inside the combustion chamber 9, while the action of decreasing the temperature is inhibited.

The third controller 38, which is also of a proportional-integral type in the described embodiment, receives the second error signal E_{NOX} from the second summing node 31 and uses it to determine the third control signal S₃, which is fed to the actuator 12 of the IGV stage 7a by the compressor 7 to regulate the flowrate Q_{A} of air. In particular, when the second error signal is positive E_{NOX} (concentration of nitrogen oxides NOₓ exceeding the allowed limits), the third control signal S₃ tends to increase the flowrate Q_{A} of air and, conversely, when the second error signal E_{NOX} is negative (concentration of nitrogen oxides NOₓ lower than the allowed limits), the third control signal S₃ tends to reduce the flowrate Q_{A} of air. In this way, the concentration of nitrogen oxides NOₓ is kept slightly below the allowable limit, as by doing so the emissions of carbon monoxide CO improve, which are a direct indicator of stable and regular combustion improved in terms of energy efficiency of the heat engine and polluting emissions.

Essentially, the emission control device 5 intervenes in the presence of an excess of carbon monoxide CO or nitrogen oxides NOₓ emissions, by changing the conditions within the combustion chamber 9. More precisely, the emission control device 5 modifies the flowrate Q_{A} of air and its temperature, thus modifying the temperature in the combustion chamber 9, so as to reduce the excessive concentrations of carbon monoxide CO or of nitrogen oxides NOₓ. If both types of substances are present in excess concentrations, the conflict management module 40 prioritizes the action of reducing emissions of carbon monoxide CO. In doing so, the temperature in the combustion chamber is increased to values which ensure, in accordance with the general conditions of the plant 1, the optimal balance between polluting emissions.

The solution described has the advantage of directly using the concentrations of pollutants as controlled variables. The emission control device 5 intervenes, in fact, on the temperature in the combustion chamber, without however the need to have a measure or an estimate of that temperature. The combustion conditions are automatically modified to counteract the excesses with respect to the reference values. Practically, the control acts directly on the chemical and physical causes of the generation of pollutants and ensures that in the combustion chamber 9 a minimum value of energy is reached for the complete oxidation of carbon, without exceeding the energy value beyond which the production of nitrogen oxides exceeds the permitted limits.

The solution also pilots the plant towards optimum combustion conditions, regardless of general conditions (specific parameters of the plant, status of aging), for the reason that the emission control device 5 operates directly on the concentrations of pollutants. It is therefore unnecessary a preliminary study of the operating conditions of each machine and optimal combustion conditions, which ensure the best balance between the emissions of carbon monoxide and of nitrogen oxides, are maintained over time even if the overall efficiency of the system tends to degrade.

The described solution is particularly effective in reducing emissions in the minimum technical environmental conditions. Advantageously, the value of the minimum technical environmental power can be reduced.

Figure 3 shows a possible operating mode of the conflict management module 40.

In optimal working conditions (block 50), the emissions of carbon monoxide CO and nitrogen oxides NOₓ are maintained within the limits and interventions of the emission control device 5 are not required. In particular (Figure 2), the first concentration error E_{CO} and the second concentration error E_{NOX} are negative, so the first saturated concentration error E_{CO}' and the second saturated concentration error E_{NOX}' are negative or zero, as well as the first nominal control signal S₁' and the second nominal control signal S₂'. In these conditions, the conflict management module 40 assigns a null value to the first control signal S₁ and to the second control signal S₂ (Figure 3, block 50) and the degree of opening of the first control valve 20 and of the second control valve 22 is not modified.

The conflict management module 40 then verifies that at least one of either the first error signal E_{CO} or the second error signal E_{NOX} remains respectively below a first activation threshold TH_{A1} and a second activation threshold TH_{A2} (Figure 3, block 55).

If the condition is verified (block 55, output YES), to the first control signal S₁ and to the second control signal S₂ are respectively assigned values of the first nominal control signal S₁' and the second nominal control signal S₂' (block 60). Therefore, the test of block 55 is repeated. Essentially, the condition is verified if the emissions are below the respective reference values, or in the presence of an imbalance of the emissions for which is requested the intervention of only one of either the first heat exchanger 16 or the second heat exchanger 17. In this case, there are no conflicts or antagonistic actions.

If, on the contrary, the emissions trend is such to request antagonistic control actions, the first error signal E_{CO} and the second error signal E_{NOX} are both above their respective thresholds (block 55, output NO).

In this case the conflict management module 40 prioritizes the control action that favours the containment of the concentration of carbon monoxide CO and inhibits the cooling of the flowrate Q_{A} of air. To this aim (block 65), to the first control signal S₁ is assigned the current value of the first nominal control signal S₁' and the second nominal control signal S₂' is set to a deactivation value S_{20FF}, causing the closure of the second control valve 22. Therefore, the second heat exchanger 17 is temporarily excluded and does not participate in the control. Alternatively, in the presence of the deactivation value S_{20FF} of the second nominal control signal S₂' the valve 22 is placed in a state of minimum opening which, although energetically unfavorable, allows the second heat exchanger 17 to intervene more quickly to the unmet conditions for its inhibition.

The conflict management module 40 then compares the first error signal E_{CO} with a release threshold TH_{R}, lesser than the first activation threshold TH_{A1} (block 70). Until the first nominal control signal S₁' is greater than the release threshold TH_{R} (block 70, output NO), the second heat exchanger 17 remains excluded (block 65). When the first nominal control signal S₁' falls below the release threshold TH_{R} (block 70, output YES), the constraint on the control of the concentration of nitrogen oxides NOₓ by way of the second heat exchanger 17 is released and to the second control signal S₂ is assigned the current value of the second nominal control signal S₂' (block 60).

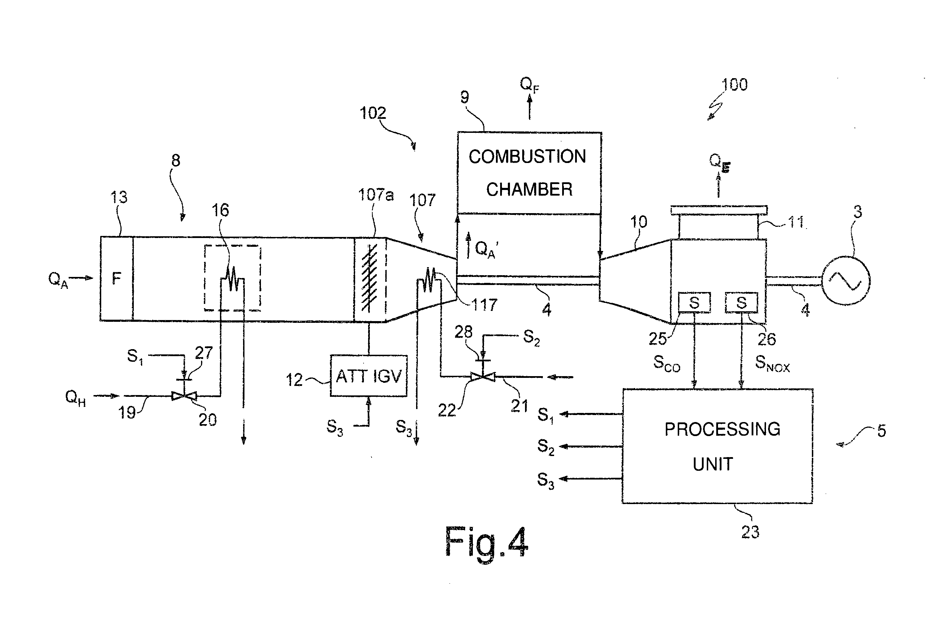

According to the embodiment illustrated in Figure 4, where equal parts to those already shown are designated by the same reference numbers, a plant for the production of electric power 100 comprises a gas turbine assembly 102 in which a compressor 107, equipped with a IGV stage 107a, allows the heat exchange between the elaborated fluid and the outside. In this case, the first heat exchanger 16 is arranged along the intake duct 8, as previously described, while a second heat exchanger 117 is coupled to the compressor 107. In the plant 100, the cooling of the flowrate Q_{A} of air for the control of emissions of nitrogen oxides NOₓ can be accomplished more efficiently after a partial compression.

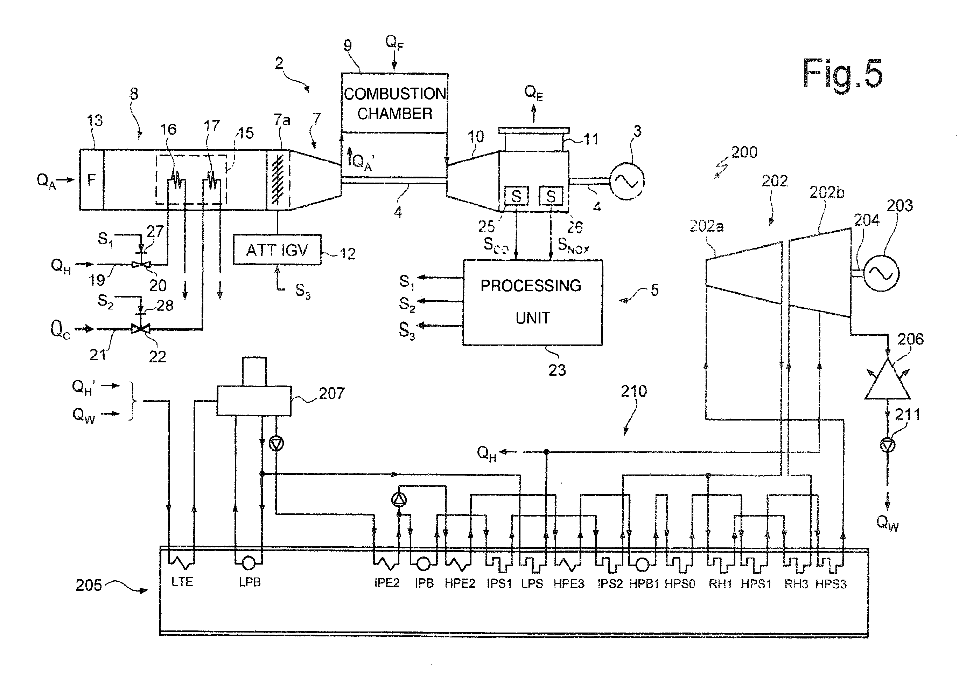

Figure 5 shows an embodiment according to which the invention is applied to a combined cycle plant 200. The plant 200 comprises the gas turbine assembly 2, the alternator 3, the emission control device 5 and the intake duct 8, along which are placed the first heat exchanger 16 and the second heat exchanger 17. The first control valve 20 and the second control valve 22 are driven through the respective actuators 27, 28, by the emission control device 5 so as to control the concentrations of carbon monoxide CO and nitrogen oxides NO_{X} in exhaust gas as described above.

The system 200 also comprises a steam turbine 202, an alternator 203 coupled upon a same shaft 204 of the steam turbine 202, a heat recovery boiler 205, a capacitor 206 and a degassing element 207.

In the illustrated embodiment, the steam turbine 202 comprises a high pressure stage 202a and a medium-low pressure stage 202b.

The flowrate Q_{E} of exhaust gas provided by the gas turbine assembly 2 is conveyed by way of the heat recovery boiler 205 where there is a circuit 210 for generating steam. The circuit 210 comprises a plurality of elements, among which the figure 5 shows:
HPS0, HPS1, HPS3: high pressure tube bundle heater;
RH1, RH3: re-superheater (high pressure);
HPB1: high pressure cylindrical body;
HPE2, HPE3: high pressure economizer;
IPS1, IPS2: medium pressure tube bundle heater;
IPB: medium pressure cylindrical body;
IPE2: medium pressure economizer;
LPS: low pressure tube bundle heater;
LPB: low pressure cylindrical body;
LTE: low pressure economizer.

Immediately downstream of the low pressure tube bundle heater LPS, a flowrate of steam is drawn off that is used to form the flowrate Q_{H} of heating fluid for the first heat exchanger 16. An output flow rate Q_{H}' from the first heat exchanger 16 is mixed with a flowrate Q_{W} of water withdrawn from the condenser 206 by way of the condensate extraction pump 211. The mixture thus obtained is supplied to the low pressure economizer LTE and then to the degassing element 207.

It is also clear that to the described method and plant modifications and variations can be made, without going beyond the scope of the present invention, as defined in the appended claims.

In particular, the invention can be used for any type of heat engine, such as internal combustion engines (such as Otto cycle or Diesel cycle engines), allowing the same advantages of the application here described for gas turbines.

In addition, the conflict management module could be configured to operate according to different modes from that described with reference to Figure 3. For example, in applications where the production of nitrogen oxides is particularly undesirable, the cooling action of the flowrate of air entering the combustion chamber may be favoured, compared to that of heating. In practice, in case of conflict the action of the first heat exchanger dedicated to heating the flowrate of intake air can be prevented, so as to favour the nullifying of the concentration of nitrogen oxides.

In addition, if the optimization of energy consumption is a secondary objective, it is possible to eliminate the conflict management and permit the simultaneous heating and cooling action, leaving the balance to be determined by the prevailing demand.

## Claims

1. A method for controlling emissions in a heat engine comprising:
sucking air (Q_{A}, Q_{A}') from outside;
burning a mixture including fuel (Q_{F}) and at least one fraction (Q_{A}') of the sucked air (Q_{A}), whereby exhaust gas (Q_{E}) is produced;
detecting a concentration of nitrogen oxides (S_{NOX}) in the exhaust gas (Q_{E}) ;
characterized detecting a concentration of carbon monoxide (S_{CO}) in the exhaust gas (QE); in that it further comprises controlling a temperature and flowrate of the sucked air (Q_{A}), as a function of the concentration of carbon monoxide (S_{CO}) detected, of the concentration of nitrogen oxides (S_{NOX}), of a reference value for carbon monoxide (S_{REF1}) and of a reference value for nitrogen oxides (S_{REF2}).

2. The method according to claim 1, in which controlling the temperature and the flowrate of the sucked air (Q_{A}) comprises:
performing an action of reducing the concentration of carbon monoxide (S_{CO}) if the concentration of carbon monoxide (S_{CO}) exceeds the reference value for carbon monoxide (S_{REF1}) ;
performing an action of reducing the concentration of nitrogen oxides (S_{NOX}) if the concentration of nitrogen oxides (S_{NOX}) exceeds the reference value for nitrogen oxides (S_{REF2}) ; and
prioritizing the action of reducing the concentration of carbon monoxide (S_{CO}) if the concentration of carbon monoxide (S_{CO}) exceeds the reference value for carbon monoxide (S_{REF1}). and the concentration of nitrogen oxides (S_{NOX}) exceeds a reference value for nitrogen oxides (S_{REF2}).

3. The method according to claim 2, in which prioritizing comprises temporarily excluding the action of reducing the concentration of nitrogen oxides (S_{NOX}).

4. The method according to any of the preceding claims, in which controlling the temperature and the flowrate of the sucked air (Q_{A}) comprises increasing the temperature of the sucked air (Q_{A}) when the concentration of carbon monoxide (S_{CO}) is found to be greater than the reference value for carbon monoxide (S_{REF1}).

5. The method according to claim 4, in which controlling the temperature and the flowrate of the sucked air (Q_{A}) comprises reducing the temperature of the sucked air (Q_{A}) when the detected concentration of nitrogen oxides (S_{NOX}) is above the reference value for nitrogen oxides (S_{REF2}) .

6. The method according to any of the preceding claims, in which controlling the temperature and the flowrate of the sucked air (Q_{A}) comprises:
calculating a first concentration error (E_{CO}) on the basis of the difference between the detected concentration of carbon monoxide (S_{CO}) and the reference value for carbon monoxide (S_{REF1}) ;
calculating a second concentration error (E_{NOX}) on the basis of the difference between the detected concentration of nitrogen oxides (S_{NOX}) and the reference value for nitrogen oxides (S_{REF2}) ;
limiting the first concentration error (E_{CO}) and the second concentration error (E_{NOX}) to values comprised between a negative saturation value and a positive saturation value; and controlling the temperature of the sucked air (Q_{A}) according to the first concentration error (E_{CO}) and the second concentration error (E_{NOX}) after the limiting step.

7. The method according to claim 6, comprising inhibiting the decreasing of the temperature of the sucked air (Q_{A}) when the concentration of carbon monoxide (S_{CO}) is found to be higher than the reference value for carbon monoxide (S_{REF1}).

8. The method according to any of the preceding claims, in which controlling the temperature and the flowrate of the sucked air (Q_{A}) comprises regulating a flowrate of heating fluid (Q_{H}) to a first heat exchanger (16) and a flowrate of cooling fluid (Q_{C}) to a second heat exchanger (17) and wherein the first heat exchanger (16) and the second heat exchanger (17) are arranged along a path (8, 7) of the sucked air (Q_{A}) .

9. The method according to any one of claims from 3 to 6, in which controlling the temperature and the flowrate of the sucked air comprises increasing the flowrate of the sucked air (Q_{A}) when the concentration of detected nitrogen oxides (S_{NOX}) is higher than the reference value for nitrogen oxides (S_{REF2}) .

10. A heat engine comprising:
a combustion chamber (9);
an intake duct (8);
flowrate supply means (7, 107), for providing the combustion chamber (9) with a controlled flowrate (Q_{A}, Q_{A}') of air sucked from the outside through the intake duct (8);
a first heat exchanger (16) and a second heat exchanger (17), arranged along a fluidic path defined between an inlet (13) of the intake duct (8) and the combustion chamber (9), for respectively heating and cooling the air flowrate (Q_{A}, Q_{A}'), wherein the first heat exchanger (16) and the second heat exchanger (17) are respectively provided with a first regulating device (20, 27) and a second regulating device (22, 28), and
an emission control device (5);
**characterized in that** the emission control device (5) comprises:
a detection device (25, 26) for detecting a concentration of carbon monoxide (S_{CO}) in the exhaust gas (Q_{E}) and a concentration of nitrogen oxides (S_{NOX}) in a flowrate of exhaust gas (Q_{E}) leaving the combustion chamber (9), and
a processing unit (23), coupled to the detection device (25, 26) and configured to control a temperature and the flowrate of the sucked air (Q_{A}), on the basis of the detected concentration of carbon monoxide (S_{CO}), of the concentration of nitrogen oxides (S_{NOX}), of a reference value for carbon monoxide (S_{REF1}) and of a reference value for nitrogen oxides (S_{REF2}).

11. The heat engine according to claim 10, in which the processing unit (23) is configured to:
perform an action of reducing the concentration of carbon monoxide (S_{CO}) if the concentration of carbon monoxide (S_{CO}) exceeds the reference value for carbon monoxide (S_{REF1});
perform an action of reducing the concentration of nitrogen oxides (S_{NOX}) if the concentration of nitrogen oxides (S_{NOX}) exceeds the reference value for nitrogen oxides (S_{REF2}); and
prioritize the action of reducing the concentration of carbon monoxide (S_{CO}) if the concentration of carbon monoxide (S_{CO}) exceeds the reference value for carbon monoxide (S_{REF1}) and the concentration of nitrogen oxides (S_{NOX}) exceeds a reference value for nitrogen oxides (S_{REF2}).

12. The method according to claim 11, in which the processing unit (23) is configured to temporarily exclude the action of reducing the concentration of nitrogen oxides (S_{NOX}).

13. The heat engine according to any one of claims from 10 to 12, comprising a turbine (10), coupled to the combustion chamber (9) to receive and expand the flowrate of exhaust gas (Q_{E}), and a discharge unit (11), to evacuate the flowrate of exhaust gas (Q_{E}), and in which the detecting device (25, 26) is placed in the exhaust assembly (11).

14. The heat engine according to any one of claims from 10 to 13, in which the processing unit (23) is configured to:
calculate a first concentration error (E_{CO}) on the basis of the difference between the concentration of carbon monoxide (S_{CO}) and a detected reference value for carbon monoxide (S_{REF1});
calculate a second concentration error (E_{NOX}) on the basis of the difference between the concentration of nitrogen oxides (S_{NOX}) detected and a reference value for nitrogen oxides (S_{REF2}) ;
limit the first concentration error (E_{CO}) and the second concentration error (E_{NOX}) to values within a negative saturation value and a positive saturation value;
determine a first control signal (S₁) and a second control signal (S₂) respectively for the first heat exchanger (16) and the second heat exchanger (17) according to the first limited concentration error (E_{CO}) and the second limited concentration error (E_{NOX}) , and
apply the first control signal (S₁) and the second control signal (S₂), respectively, to the first control device (20, 27) of the first heat exchanger (16) and the second control device (22, 28) of the second heat exchanger (17).

15. The heat engine according to claim 14, in which the processing unit (23) is further configured to assign to the second control signal (S₂) a deactivation value (S_{2OFF}), for which the second heat exchanger (17) is excluded or limited, when the first concentration signal (S_{CO}) is indicative of a detected concentration of carbon monoxide (S_{CO}) higher than a reference value for carbon monoxide (S_{REF1}).

## Patentansprüche

1. Verfahren zum Steuern von Emissionen in einer Wärmekraftmaschine, das umfasst:
Ansaugen von Luft (Q_{A}, Q_{A}') von außen;
Verbrennen eines Gemischs, das Kraftstoff (Q_{F}) und mindestens einen Anteil (Q_{A}') der angesaugten Luft (Q_{A}) enthält, wodurch Abgas (Q_{E}) erzeugt wird;
Detektieren einer Konzentration von Stickoxiden (S_{NOX}) in dem Abgas (Q_{E});
**dadurch gekennzeichnet, dass** es ferner umfasst:
Detektieren einer Konzentration von Kohlenstoffmonoxid (S_{CO}) in dem Abgas (Q_{E});
Steuern einer Temperatur und einer Durchflussrate der angesaugten Luft (Q_{A}) als Funktion der detektierten Konzentration von Kohlenstoffmonoxid (S_{CO}), der Konzentration von Stickoxiden (S_{NOX}), eines Referenzwerts für Kohlenstoffmonoxid (S_{REF1}) und eines Referenzwerts für Stickoxide (S_{REF2}).

2. Verfahren nach Anspruch 1, wobei das Steuern der Temperatur und der Durchflussrate der angesaugten Luft (Q_{A}) umfasst:
Durchführen einer Maßnahme zur Verringerung der Konzentration von Kohlenstoffmonoxid (S_{CO}) dann, wenn die Konzentration von Kohlenstoffmonoxid (S_{CO}) den Referenzwert für Kohlenstoffmonoxid (S_{REF1}) überschreitet;
Durchführen einer Maßnahme zur Verringerung der Konzentration von Stickoxiden (S_{NOx}) dann, wenn die Konzentration von Stickoxiden (S_{NOx}) den Referenzwert für Stickoxide (S_{REF2}) überschreitet; und
Priorisieren der Maßnahme zur Verringerung der Konzentration von Kohlenstoffmonoxid (S_{CO}) dann, wenn die Konzentration von Kohlenstoffmonoxid (S_{CO}) den Referenzwert für Kohlenstoffmonoxid (S_{REF1}) überschreitet und die Konzentration von Stickoxiden (S_{NOX}) einen Referenzwert für Stickoxide (S_{REF2}) überschreitet.

3. Verfahren nach Anspruch 2, wobei das Priorisieren ein vorübergehendes Aussetzen der Maßnahme zur Verringerung der Konzentration von Stickoxiden (S_{NOX}) umfasst.

4. Verfahren nach einem der vorhergehenden Ansprüche, wobei das Steuern der Temperatur und der Durchflussrate der angesaugten Luft (Q_{A}) ein Erhöhen der Temperatur der angesaugten Luft (Q_{A}) dann, wenn sich die Konzentration von Kohlenstoffmonoxid (S_{CO}) als größer als der Referenzwert für Kohlenstoffmonoxid (S_{REF1}) herausstellt, umfasst.

5. Verfahren nach Anspruch 4, wobei das Steuern der Temperatur und der Durchflussrate der angesaugten Luft (Q_{A}) ein Verringern der Temperatur der angesaugten Luft (Q_{A}) dann, wenn die detektierte Konzentration der Stickoxide (S_{NOX}) über dem Referenzwert für Stickoxide (S_{REF2}) liegt, umfasst.

6. Verfahren nach einem der vorhergehenden Ansprüche, wobei das Steuern der Temperatur und der Durchflussrate der angesaugten Luft (Q_{A}) umfasst:
Berechnen eines ersten Konzentrationsfehlers (E_{CO}) auf der Basis der Differenz zwischen der detektierten Konzentration von Kohlenstoffmonoxid (S_{CO}) und dem Referenzwert für Kohlenstoffmonoxid (S_{REF1});
Berechnen eines zweiten Konzentrationsfehlers (E_{NOX}) auf der Basis der Differenz zwischen der detektierten Konzentration von Stickoxiden (S_{NOX}) und dem Referenzwert für Stickoxide (S_{REF2});
Begrenzen des ersten Konzentrationsfehlers (E_{CO}) und des zweiten Konzentrationsfehlers (E_{NOX}) auf Werte, die zwischen einem negativen Sättigungswert und einem positiven Sättigungswert liegen; und
Steuern der Temperatur der angesaugten Luft (Q_{A}) gemäß dem ersten Konzentrationsfehler (E_{CO}) und dem zweiten Konzentrationsfehler (E_{NOX}) nach dem Schritt des Begrenzens.

7. Verfahren nach Anspruch 6, das ein Hemmen des Verringerns der Temperatur der angesaugten Luft (Q_{A}) dann, wenn sich die Konzentration von Kohlenstoffmonoxid (S_{CO}) als höher als der Referenzwert für Kohlenstoffmonoxid (S_{REF1}) herausstellt, umfasst.

8. Verfahren nach einem der vorhergehenden Ansprüche, wobei das Steuern der Temperatur und der Durchflussrate der angesaugten Luft (Q_{A}) ein Regulieren einer Durchflussrate von Heizfluid (Q_{H}) zu einem ersten Wärmetauscher (16) und einer Durchflussrate von Kühlfluid (Q_{C}) zu einem zweiten Wärmetauscher (17) umfasst und wobei der erste Wärmetauscher (16) und der zweite Wärmetauscher (17) entlang eines Wegs (8, 7) der angesaugten Luft (Q_{A}) angeordnet sind.

9. Verfahren nach einem der Ansprüche 3 bis 6, wobei das Steuern der Temperatur und der Durchflussrate der angesaugten Luft ein Erhöhen der Durchflussrate der angesaugten Luft (Q_{A}) dann, wenn die Konzentration der detektierten Stickoxide (S_{NOX}) höher als der Referenzwert für Stickoxide (S_{REF2}) ist, umfasst.

10. Wärmekraftmaschine, die umfasst:
eine Brennkammer (9);
einen Einlasskanal (8);
Durchflussraten-Bereitstellungsmittel (7, 107) zum Bereitstellen einer gesteuerten Durchflussrate (Q_{A}, Q_{A}') der angesaugten Luft von außen durch den Einlasskanal (8) für die Brennkammer (9);
einen ersten Wärmetauscher (16) und einen zweiten Wärmetauscher (17), die entlang eines Fluidwegs, der zwischen einem Einlass (13) des Einlasskanals (8) und der Brennkammer (9) definiert ist, jeweils zum Erwärmen und zum Kühlen der Luftdurchflussrate (Q_{A}, Q_{A}') angeordnet sind, wobei der erste Wärmetauscher (16) und der zweite Wärmetauscher (17) jeweils mit einer ersten Regulierungsvorrichtung (20, 27) und einer zweiten Regulierungsvorrichtung (22, 28) versehen sind, und
eine Emissionssteuervorrichtung (5);
**dadurch gekennzeichnet, dass** die Emissionssteuervorrichtung (5) umfasst:
eine Detektionsvorrichtung (25, 26) zum Detektieren einer Konzentration von Kohlenstoffmonoxid (S_{CO}) in dem Abgas (Q_{E}) und einer Konzentration von Stickoxiden (S_{NOX}) in einer Durchflussrate von Abgas (Q_{E}), das die Brennkammer (9) verlässt, und
eine Aufbereitungseinheit (23), die mit der Detektionseinrichtung (25, 26) gekoppelt ist und dazu ausgelegt ist, eine Temperatur und die Durchflussrate der angesaugten Luft (Q_{A}) auf der Grundlage der detektierten Konzentration von Kohlenstoffmonoxid (S_{CO}), der Konzentration von Stickoxiden (S_{NOX}), eines Referenzwerts für Kohlenstoffmonoxid (S_{REF1}) und eines Referenzwerts für Stickoxide (S_{REF2}) zu steuern.

11. Wärmekraftmaschine nach Anspruch 10, wobei die Aufbereitungseinheit (23) ausgelegt ist
zum Durchführen einer Maßnahme zur Verringerung der Konzentration von Kohlenstoffmonoxid (S_{CO}) dann, wenn die Konzentration von Kohlenstoffmonoxid (S_{CO}) den Referenzwert für Kohlenstoffmonoxid (S_{REF1}) überschreitet;
zum Durchführen einer Maßnahme zur Verringerung der Konzentration von Stickoxiden (S_{NOX}) dann, wenn die Konzentration von Stickoxiden (S_{NOX}) den Referenzwert für Stickoxide (S_{REF2}) überschreitet; und
zum Priorisieren der Maßnahme zur Verringerung der Konzentration von Kohlenstoffmonoxid (S_{CO}) dann, wenn die Konzentration von Kohlenstoffmonoxid (S_{CO}) den Referenzwert für Kohlenstoffmonoxid (S_{REF1}) überschreitet und die Konzentration von Stickoxiden (S_{NOX}) einen Referenzwert für Stickoxide (S_{REF2}) überschreitet.

12. Wärmekraftmaschine nach Anspruch 11, wobei die Aufbereitungseinheit (23) dazu ausgelegt ist, die Maßnahme zur Verringerung der Konzentration von Stickoxiden (S_{NOX}) vorübergehend auszusetzen.

13. Wärmekraftmaschine nach einem der Ansprüche 10 bis 12, die eine Turbine (10) umfasst, die mit der Brennkammer (9) gekoppelt ist, um die Durchflussrate des Abgases (Q_{E}) aufzunehmen und expandieren zu lassen, und eine Abgabeeinheit (11) umfasst, um die Durchflussrate des Abgases (Q_{E}) zu evakuieren, und wobei die Detektionsvorrichtung (25, 26) in der Abgasanordnung (11) angeordnet ist.

14. Wärmekraftmaschine nach einem der Ansprüche 10 bis 13, wobei die Aufbereitungseinheit (23) ausgelegt ist
zum Berechnen eines ersten Konzentrationsfehlers (E_{CO}) auf der Basis der Differenz zwischen der detektierten Konzentration von Kohlenstoffmonoxid (S_{CO}) und dem Referenzwert für Kohlenstoffmonoxid (S_{REF1});
zum Berechnen eines zweiten Konzentrationsfehlers (E_{NOX}) auf der Basis der Differenz zwischen der detektierten Konzentration von Stickoxiden (S_{NOX}) und dem Referenzwert für Stickoxide (S_{REF2});
zum Begrenzen des ersten Konzentrationsfehlers (E_{CO}) und des zweiten Konzentrationsfehlers (E_{NOx}) auf Werte, die zwischen einem negativen Sättigungswert und einem positiven Sättigungswert liegen;
zum Bestimmen eines ersten Steuersignals (S1) und eines zweiten Steuersignals (S2) jeweils für den ersten Wärmetauscher (16) und den zweiten Wärmetauscher (17) gemäß dem ersten begrenzten Konzentrationsfehler (E_{CO}) und dem zweiten begrenzten Konzentrationsfehler (E_{NOX}), und
Anwenden des ersten Steuersignals (S1) und des zweiten Steuersignals (S2) jeweils auf die erste Steuervorrichtung (20, 27) des ersten Wärmetauschers (16) und die zweite Steuervorrichtung (22, 28) des zweiten Wärmetauschers (17).

15. Wärmekraftmaschine nach Anspruch 14, wobei die Aufbereitungseinheit (23) ferner dazu ausgelegt ist, dem zweiten Steuersignal (S2) einen Deaktivierungswert (S_{2OFF} zuzuordnen, für den der zweite Wärmetauscher (17) dann ausgeschlossen oder beschränkt wird, wenn das erste Konzentrationssignal (S_{CO}) eine detektierte Konzentration von Kohlenstoffmonoxid (S_{CO}) angibt, die höher als ein Referenzwert für Kohlenstoffmonoxid (S_{REF1}) ist.

## Revendications

1. Procédé de régulation des émissions dans un moteur thermique comprenant :
l'aspiration de l'air (Q_{A}, Q_{A}') depuis l'extérieur ;
le brûlage d'un mélange incluant du carburant (Q_{F}) et au moins une fraction (Q_{A}') de l'air aspiré (Q_{A}), moyennant quoi un gaz d'échappement (Q_{E}) est produit ;
la détection d'une concentration en oxydes d'azote (S_{NOX}) dans le gaz d'échappement (Q_{E}) ;
**caractérisé en ce qu'**il comprend en outre la détection d'une concentration en monoxyde de carbone (S_{OD}) dans le gaz d'échappement (Q_{E}) ; la régulation d'une température et d'un débit de l'air aspiré (Q_{A}), en fonction de la concentration en monoxyde de carbone (S_{CO}) détectée, de la concentration en oxydes d'azote (S_{NOX}), d'une valeur de référence pour le monoxyde de carbone (S_{REF1}) et d'une valeur de référence pour les oxydes d'azote (S_{REF2}).

2. Procédé selon la revendication 1, dans lequel la régulation de la température et du débit de l'air aspiré (Q_{A}) comprend :
la réalisation d'une action de réduction de la concentration en monoxyde de carbone (S_{CO}) si la concentration en monoxyde de carbone (S_{CO}) dépasse la valeur de référence pour le monoxyde de carbone (S_{REF1}) ;
la réalisation d'une action de réduction de la concentration en oxydes d'azote (S_{NOX}) si la concentration en oxydes d'azote (S_{NOX}) dépasse la valeur de référence pour les oxydes d'azote (S_{REF2}) ; et
la priorisation de l'action de réduction de la concentration en monoxyde de carbone (S_{CO}) si la concentration en monoxyde de carbone (S_{CO}) dépasse la valeur de référence pour le monoxyde de carbone (S_{REF1}) et la concentration en oxydes d'azote (S_{NOX}) dépasse une valeur de référence pour les oxydes d'azote (S_{REF2}).

3. Procédé selon la revendication 2, dans lequel la priorisation comprend l'exclusion temporaire de l'action de réduction de la concentration en oxydes d'azote (S_{NOX}) .

4. Procédé selon l'une quelconque des revendications précédentes, dans lequel la régulation de la température et du débit de l'air aspiré (Q_{A}) comprend l'augmentation de la température de l'air aspiré (Q_{A}) lorsque la concentration en monoxyde de carbone (S_{CO}) s'avère être plus grande que la valeur de référence pour le monoxyde de carbone (S_{REF1}).

5. Procédé selon la revendication 4, dans lequel la régulation de la température et du débit de l'air aspiré (Q_{A}) comprend la réduction de la température de l'air aspiré (Q_{A}) lorsque la concentration détectée en oxydes d'azote (S_{NOX}) est au-dessus de la valeur de référence pour les oxydes d'azote (S_{REF2}).

6. Procédé selon l'une quelconque des revendications précédentes, dans lequel la régulation de la température et du débit de l'air aspiré (Q_{A}) comprend :
le calcul d'une première erreur de concentration (E_{CO}) sur la base de la différence entre la concentration détectée en monoxyde de carbone (S_{CO}) et la valeur de référence pour le monoxyde de carbone (S_{REF1} ) ;
le calcul d'une seconde erreur de concentration (E_{NOX}) sur la base de la différence entre la concentration détectée en oxydes d'azote (S_{NOX}) et la valeur de référence pour les oxydes d'azote (S_{REF2}) ;
la limitation de la première erreur de concentration (E_{CO}) et de la seconde erreur de concentration (E_{NOX}) à des valeurs comprises entre une valeur de saturation négative et une valeur de saturation positive ; et
la régulation de la température de l'air aspiré (Q_{A}) selon la première erreur de concentration (E_{CO}) et la seconde erreur de concentration (E_{NOX}) après l'étape de limitation.

7. Procédé selon la revendication 6, comprenant l'inhibition de la diminution de la température de l'air aspiré (Q_{A}) lorsque la concentration en monoxyde de carbone (S_{CO}) s'avère être plus élevée que la valeur de référence pour le monoxyde de carbone (S_{REF1}).

8. Procédé selon l'une quelconque des revendications précédentes, dans lequel la régulation de la température et du débit de l'air aspiré (Q_{A}) comprend la régulation d'un débit de fluide chauffant (Q_{H}) en direction d'un premier échangeur de chaleur (16) et d'un débit de fluide refroidissant (Q_{C}) en direction d'un second échangeur de chaleur (17) et dans lequel le premier échangeur de chaleur (16) et le second échangeur de chaleur (17) sont agencés le long d'un chemin (8, 7) de l'air aspiré (Q_{A}) .

9. Procédé selon l'une quelconque des revendications 3 à 6, dans lequel la régulation de la température et du débit de l'air aspiré comprend l'augmentation du débit de l'air aspiré (Q_{A}) lorsque la concentration en oxydes d'azote détectés (S_{NOX}) est plus élevée que la valeur de référence pour les oxydes d'azote (S_{REF2}).

10. Moteur thermique comprenant :
une chambre de combustion (9) ;
un conduit d'admission (8) ;
des moyens d'apport de débit (7, 107), permettant de fournir à la chambre de combustion (9) un débit régulé (Q_{A}, Q_{A}') d'air aspiré depuis l'extérieur par l'intermédiaire du conduit d'admission (8) ;
un premier échangeur de chaleur (16) et un second échangeur de chaleur (17), agencés le long d'un chemin fluidique défini entre une entrée (13) du conduit d'admission (8) et la chambre de combustion (9), pour respectivement chauffer et refroidir le débit d'air (Q_{A}, Q_{A}'), où le premier échangeur de chaleur (16) et le second échangeur de chaleur (17) sont respectivement pourvus d'un premier dispositif régulateur (20, 27) et d'un second dispositif régulateur (22, 28), et
un dispositif de régulation d'émission (5) ;
**caractérisé en ce que** le dispositif de régulation d'émission (5) comprend :
un dispositif de détection (25, 26) permettant de détecter une concentration en monoxyde de carbone (S_{CO}) dans le gaz d'échappement (Q_{E}) et une concentration en oxydes d' azote (S_{NOX}) dans un débit de gaz d'échappement (Q_{E}) quittant la chambre de combustion (9), et
une unité de traitement (23), couplée au dispositif de détection (25, 26) et configurée pour réguler une température et le débit de l'air aspiré (Q_{A}), sur la base de la concentration détectée en monoxyde de carbone (S_{CO}), de la concentration en oxydes d'azote (S_{NOX}) , d'une valeur de référence pour le monoxyde de carbone (S_{REF1}) et d'une valeur de référence pour les oxydes d'azote (S_{REF2}).

11. Moteur thermique selon la revendication 10, dans lequel l'unité de traitement (23) est configurée pour :
réaliser une action de réduction de la concentration en monoxyde de carbone (S_{CO}) si la concentration en monoxyde de carbone (S_{CO}) dépasse la valeur de référence pour le monoxyde de carbone (S_{REF1}) ;
réaliser une action de réduction de la concentration en oxydes d'azote (S_{NOX}) si la concentration en oxydes d'azote (S_{NOX}) dépasse la valeur de référence pour les oxydes d'azote (S_{REF2}) ; et
prioriser l'action de réduction de la concentration en monoxyde de carbone (S_{CO}) si la concentration en monoxyde de carbone (S_{CO}) dépasse la valeur de référence pour le monoxyde de carbone (S_{REF1}) et la concentration en oxydes d'azote (S_{NOX}) dépasse une valeur de référence pour les oxydes d'azote (S_{REF2}).

12. Procédé selon la revendication 11, dans lequel l'unité de traitement (23) est configurée pour exclure temporairement l'action de réduction de la concentration en oxydes d'azote (S_{NOX}).

13. Moteur thermique selon l'une quelconque des revendications 10 à 12, comprenant une turbine (10), couplée à la chambre de combustion (9) pour recevoir et détendre le débit de gaz d'échappement (Q_{E}), et une unité de décharge (11), pour évacuer le débit de gaz d'échappement (Q_{E}), et dans lequel le dispositif de détection (25, 26) est placé dans l'ensemble d'échappement (11).

14. Moteur thermique selon l'une quelconque des revendications 10 à 13, dans lequel l'unité de traitement (23) est configurée pour :
calculer une première erreur de concentration (E_{CO}) sur la base de la différence entre la concentration en monoxyde de carbone (S_{CO}) et une valeur de référence détectée pour le monoxyde de carbone (S_{REF1}) ;
calculer une seconde erreur de concentration (E_{NOX}) sur la base de la différence entre la concentration en oxydes d' azote (S_{NOX}) détectée et une valeur de référence pour les oxydes d'azote (S_{REF2}) ;
limiter la première erreur de concentration (E_{CO}) et la seconde erreur de concentration (E_{NOX}) à des valeurs au sein d'une valeur de saturation négative et d'une valeur de saturation positive ;
déterminer un premier signal de commande (S1) et un second signal de commande (S₂) respectivement pour le premier échangeur de chaleur (16) et le second échangeur de chaleur (17) selon la première erreur de concentration limitée (E_{CO}) et la seconde erreur de concentration limitée (E_{NOX}) , et
appliquer le premier signal de commande (S1) et le second signal de commande (S₂), respectivement, au premier dispositif de commande (20, 27) du premier échangeur de chaleur (16) et au second dispositif de commande (22, 28) du second échangeur de chaleur (17).

15. Moteur thermique selon la revendication 14, dans lequel l'unité de traitement (23) est configurée en outre pour attribuer au second signal de commande (S₂) une valeur de désactivation (S_{2OFF}), pour laquelle le second échangeur de chaleur (17) est exclu ou limité, lorsque le premier signal de concentration (S_{CO}) est indicatif d'une concentration détectée en monoxyde de carbone (S_{CO}) plus élevée qu'une valeur de référence pour le monoxyde de carbone (S_{REF1}).
